(19) Europäisches Patentamt
European Patent Office
Office européen des brevets

(11) **EP 1 798 397 B1**

(12) **FASCICULE DE BREVET EUROPEEN**

(45) Date de publication et mention
de la délivrance du brevet:
**19.10.2011 Bulletin 2011/42**

(51) Int Cl.:
*F02C 7/264* (2006.01)    *F02P 23/04* (2006.01)
*H05H 1/22* (2006.01)    *H01S 3/0941* (2006.01)
*F23Q 21/00* (2006.01)

(21) Numéro de dépôt: **06291930.3**

(22) Date de dépôt: **14.12.2006**

(54) **Système d'allumage laser**

Laserzündsystem

Laser ignition system

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **14.12.2005 FR 0512688**
**05.04.2006 FR 0603013**

(43) Date de publication de la demande:
**20.06.2007 Bulletin 2007/25**

(73) Titulaire: **Meggitt (France)**
**75011 Paris (FR)**

(72) Inventeurs:
• **Gaborel, Gaël**
**16200 Bourg Charente (FR)**
• **El-Rabii, Hazem**
**75014 Paris (FR)**
• **Lapios, Jean-Paul**
**16000 Angouleme (FR)**
• **De La Bardonnie, Jean**
**33480 Avensan (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
EP-A- 0 290 154    WO-A-01/69136
WO-A-98/11388    US-A- 5 692 082
US-A- 5 769 621

## Description

L'invention concerne un système d'allumage laser pour turbomachine aéronautique et industrielle.

En particulier, l'invention concerne un système d'allumage laser d'un carburant pulvérisé dans une chambre de combustion, le système comportant une source laser adaptée pour générer un faisceau laser, une fibre optique propre à transmettre le faisceau laser généré dans la chambre de combustion et des moyens de couplage de la source laser à la fibre optique.

Il est connu des systèmes d'allumage dans lesquels un boîtier d'allumage génère une décharge électrique transmise au moyen d'un conducteur électrique vers une bougie constituée de deux électrodes entre lesquelles se forme une étincelle.

Toutefois, ces systèmes d'allumage ne permettent pas d'allumer des mélanges pauvres et présentent des problèmes d'entretien de la combustion ou de rallumage en vol. De plus, ces systèmes d'allumage nécessitent de nombreux travaux de maintenance.

Par ailleurs, il est connu des systèmes d'allumage laser par claquage résonnant, notamment par les documents WO 98/11388 et EP-0 290 154, dans lesquels un faisceau laser est focalisé dans une chambre de combustion jusqu'à ce que la densité de puissance du rayonnement du faisceau laser engendre la création d'un plasma et provoque l'inflammation de gouttelettes de carburant.

Toutefois, ces systèmes d'allumage sont fragiles et ont un rendement faible.

L'invention a pour but un système d'allumage laser adapté pour délivrer des puissances élevées et propres à supporter des conditions de pression, vibration et température importantes notamment liées à une utilisation dans des turbomachines aéronautiques.

A cet effet, l'invention a pour objet un système d'allumage laser du type précité, **caractérisé en ce que** les moyens de couplage comprennent :

- une lentille de couplage propre à focaliser le faisceau laser en un point focal situé en amont de la fibre optique ;
- un connecteur de raccordement de la source laser à la fibre optique ; et
- des moyens de maintien rectilignes d'un tronçon d'entrée de la fibre optique disposés en aval du connecteur et s'étendant sur une distance prédéfinie de la fibre optique.

Suivant des modes particuliers de réalisation, le système d'allumage laser comporte une ou plusieurs des caractéristiques suivantes :

- la lentille de couplage présente une distance focale comprise entre 50 et 200 mm ;
- les moyens de maintien rectilignes de la fibre optique s'étendent sur une distance supérieure ou égale à 20 cm pour empêcher la destruction de la fibre optique ;
- les moyens de couplage de la source laser à la fibre optique comportent entre la source laser et la fibre optique, un boîtier contenant un gaz ayant un potentiel d'ionisation supérieur au potentiel d'ionisation de l'air ;
- la source laser est propre à produire un faisceau laser ayant un profil uniforme en champ proche ;
- le système d'allumage comprend des moyens de couplage de la fibre optique à la chambre de combustion comportant au moins une lentille convergente de collimation présentant une distance focale comprise entre 30 et 400 mm;
- les moyens de couplage de la fibre optique à la chambre de combustion comprennent en outre en aval de la lentille de collimation, une lentille de focalisation présentant une distance de focalisation comprise entre 5 et 200 mm ;
- la lentille de focalisation est une lentille en saphir recouverte d'une couche anti-reflet d'oxyde de silicium, l'épaisseur de la couche d'oxyde de silicium étant définie à partir de la formule suivante :

$$\text{Épaisseur de la couche d'oxyde de silicium} = \frac{m \times 0,25 \times \lambda}{n} \pm 50nm$$

dans laquelle :

- m est un nombre entier pair ;
- $\lambda$ est la longueur d'onde du faisceau laser ; et
- n est l'indice de réfraction de l'oxyde de silicium ;

- la source laser est propre à générer un faisceau laser de puissance minimale égale à 20 mJ ; et
- les moyens de couplage de la fibre optique à la chambre de combustion comporte en outre une lentille divergente disposée en aval de la fibre optique et en amont de la lentille de collimation, la lentille divergente présentant une distance focale comprise entre - 20 mm et - 200 mm.

L'invention sera mieux comprise à la lecture de la description qui va suivre, donnée uniquement à titre d'exemple et faite en se référant aux dessins, sur lesquels :

- la figure 1 est une vue schématique du système d'allumage laser selon l'invention ; et
- la figure 2 est une vue schématique en coupe du système d'allumage illustré sur la figure 1, lorsque celui-ci est connecté à une chambre de combustion.

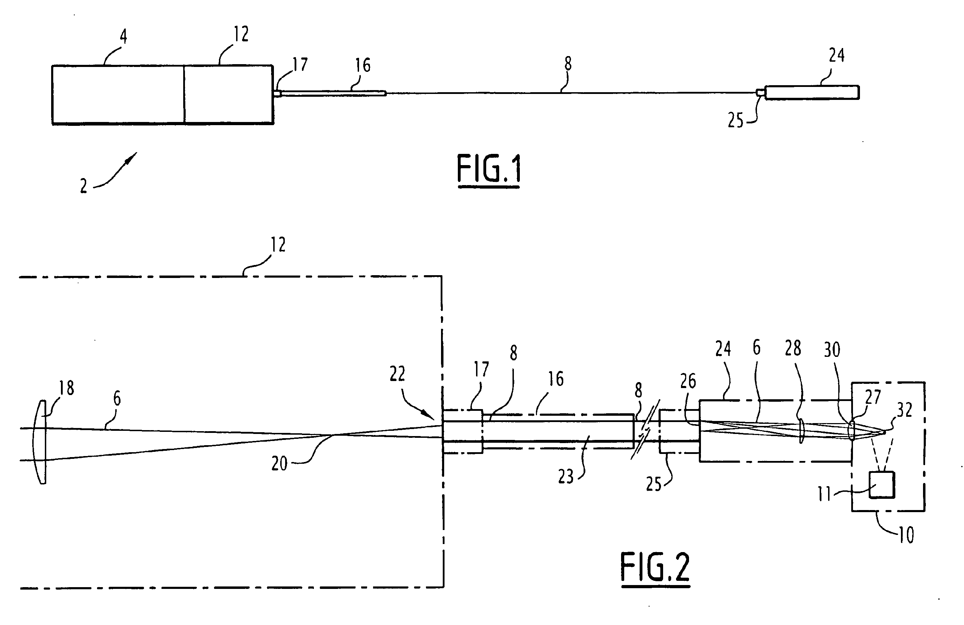

Le système d'allumage laser 2 selon l'invention est illustré sur les figures 1 et 2. Celui-ci comporte une source laser 4 adaptée pour générer un faisceau laser 6, et une fibre optique 8 propre à transmettre le faisceau laser 6 dans une chambre de combustion 10 d'une turbomachine aéronautique ou industrielle.

De façon classique, la chambre de combustion 10 comprend des moyens 11 de pulvérisation de gouttelettes de carburant. Le système d'allumage laser 2 est propre à appliquer un faisceau laser de densité de puissance élevée, c'est-à-dire de l'ordre de $10^{10} W.cm^{-2}$ à $10^{12} W.cm^{-2}$ à ces gouttelettes de carburant pour les enflammer par claquage non résonant.

La source laser 4 est de type Nd:Yag. Elle est propre à délivrer des impulsions de puissance élevée qui présentent un profil uniforme en champ proche. La puissance délivrée par la source laser est supérieure à 20 mJ et de préférence supérieure à 50 mJ .A titre d'exemple, les impulsions laser délivrées présentent une longueur d'onde égale à 1064 nm, un diamètre de 4 mm et une puissance de 50 mJ pour une durée de 6 ns.

La fibre optique 8 est une fibre multimode de diamètre de coeur de 1 mm et de longueur comprise entre 1 et 10 m.

La fibre optique 8 est connectée à la source laser 4 par l'intermédiaire d'un boîtier de couplage hermétique 12 fixé à une gaine rigide 16 à l'aide d'un connecteur 17.

Le boîtier de couplage 12 comprend une lentille de couplage 18 propre à focaliser le faisceau laser 6 issu de la source laser 4 en un point focal 20 situé en amont de l'entrée 22 de la fibre optique pour couvrir uniformément le coeur de la fibre optique 8.

La lentille de couplage 18 est une lentille convergente de distance focale égale à 100 mm.

Le boîtier de couplage 12 est fixé hermétiquement à la source laser 4. Il contient un gaz ayant un potentiel d'ionisation supérieur au potentiel d'ionisation de l'air, tel que l'hélium.

La gaine rigide 16 est montée sur la fibre optique 8 et est fixée au connecteur 17. Elle se prolonge au-delà du connecteur 17. La gaine est propre à maintenir rectiligne et droit un tronçon d'entrée 23 de la fibre optique situé du côté de l'entrée de la fibre optique, pour empêcher une réflexion incontrôlée du faisceau laser 6 dans ce tronçon 23 de la fibre optique et éviter les risques de claquage de la fibre optique. Cette gaine rigide 16 est constituée d'un maillage en fil métallique ou d'un tube rigide qui s'étend sur une longueur au moins égale à 20 cm et de préférence sur une longueur comprise entre 20 cm et 50 cm.

Le connecteur 17 est un connecteur connu en soi, par exemple un connecteur de standard SMA. Il réalise le raccordement entre la fibre optique 8 et le boîtier de couplage 12. Le connecteur 17 s'étend le long de la fibre optique sur une longueur de 3 cm.

Le système d'allumage laser 2 comprend également un connecteur de sortie 24 fixé à la sortie 26 de la fibre optique 8 par l'intermédiaire d'un connecteur 25 de standard SMA.

Le connecteur de sortie 24 est propre à se visser directement sur la chambre de combustion 10 de la turbomachine autour d'une ouverture 27 de passage du faisceau laser 6. Le connecteur de sortie 24 supporte une lentille de collimation 28 disposée en amont d'une lentille de focalisation 30.

Il est aussi appelé bougie optique par analogie avec les bougies électriques traditionnellement utilisées.

La lentille de collimation 28 présente une distance focale de 75 mm et est donc placée à 75 mm de la sortie 26 de la fibre optique afin d'obtenir un faisceau parallèle.

La lentille de focalisation 30 focalise le faisceau laser 6 en un point focal 32 situé dans la chambre de combustion 10. Elle présente une distance de focalisation égale à 20 mm.

Le rapport entre la distance focale de la lentille de focalisation 30 et la distance focale de la lentille de collimation 28 détermine la taille du point focal dans la chambre de combustion et par conséquent la puissance crête nécessaire pour obtenir un claquage sur un mélange air/carburant.

La lentille de focalisation 30 est fixée à la paroi d'extrémité du connecteur de sortie 24, de sorte qu'elle remplace le hublot saphir qui est généralement monté sur l'ouverture 27 de la chambre de combustion 10.

A cet effet, cette lentille 30 est une lentille en saphir de sorte qu'elle est capable de résister à la température de la chambre de combustion 10.

Comme l'indice de réfraction du saphir est élevé, la lentille de focalisation 30 est recouverte d'une couche anti-reflet d'oxyde de silicium. L'épaisseur de la couche d'oxyde de silicium est définie à partir de la formule suivante :

$$\text{Épaisseur de la couche d'oxyde de silicium} = \frac{m \times 0,25 \times \lambda}{n} \pm 50 nm$$

dans laquelle:

- m est un nombre entier pair ;
- λ est la longueur d'onde du faisceau laser ; et
- n est l'indice de l'oxyde de silicium.

En variante, une source laser 4 de type à cavité dite stable ou à cavité dite GRM (cavité instable à miroir à réflectivité variable) est utilisée dans le système d'allumage 2.

En variante également, une source laser 4 de type amplificateur à fibres multimodes MOPA (Master Oscillator Power Amplifier) est utilisée dans le système d'allumage 2. Ce type de source laser est basé sur l'amplification dans une fibre optique d'une impulsion générée par une diode laser. Ces sources laser utilisent des fibres otiques de faible ouverture numérique de sorte que seuls les modes faiblement divergents de la fibre optique sont amplifiés.

En variante, une lentille de couplage 18 présentant une distance focale comprise entre 50 et 200 mm, ou de préférence entre 100 et 150 mm est montée dans le boîtier de couplage 12.

En variante, la lentille de collimation 28 présente une distance focale comprise entre 30 et 400 mm ou de préférence entre 80 et 150 mm.

En variante, la lentille de focalisation 30 présente une distance de focalisation comprise entre 5 et 200 mm ou de préférence entre 8 et 80 mm.

Avantageusement, la fibre est maintenue droite par une gaine rigide 16 afin d'éviter les courbures de celle-ci dans les premières dizaines de centimètres car l'utilisation d'une lentille de focalisation 18 de longue distance focale accroît les risques d'inflammation et de destruction de la fibre optique 8 si celle-ci n'est pas maintenue droite.

Avantageusement, la grande distance focale de la lentille de couplage 18 permet de réduire la taille du point focal 20 et de réduire les risques de claquage (création d'étincelles) en amont de la face d'entrée 22 de la fibre optique.

De plus, la grande distance focale de la lentille de couplage 18 permet d'obtenir un faisceau de faible ouverture numérique à l'entrée 22 de la fibre optique 8 de sorte que le nombre de modes de propagation du faisceau laser 6 à l'intérieur de la fibre optique est faible.

En conséquence, le faisceau laser 6 présente une bonne qualité spatiale à la sortie 26 de la fibre optique. Grâce au faible nombre de modes de propagation du faisceau laser 6 dans la fibre optique 8 et à la faible longueur de celle-ci, la divergence du faisceau laser 6 à la sortie 26 de la fibre optique est beaucoup plus faible que l'ouverture numérique de la fibre optique.

Avantageusement, la divergence du faisceau laser 6 à la sortie 26 de la fibre optique 8 est beaucoup plus faible que l'ouverture numérique de la fibre optique 8, de sorte que la lentille de collimation 28 peut présenter une longue distance focale pour un diamètre limité.

Le diamètre du point de focalisation 32 dans la chambre de combustion 10 étant proportionnel au rapport entre la distance focale de la lentille 30 sur la distance focale de la lentille 28, la longue distance focale de la lentille 28 permet un diamètre du point de focalisation plus petit. En conséquence, la puissance maximum nécessaire pour obtenir un claquage sur un mélange air carburant est réduite.

En variante, la lentille de focalisation 30 présente un profil asphérique et une distance de focalisation égale à 8 mm. Cette lentille de focalisation 30 asphérique est utilisée lorsque les distances de focalisation sont inférieures à 20 mm afin d'améliorer le rapport distance de focalisation / distance de collimation.

En variante, la lentille de collimation 28 est remplacée par un système de collimation constitué d'une lentille divergente et d'une lentille convergente. La lentille divergente est disposée en aval de la fibre optique. Elle présente une distance focale comprise entre - 10 mm et - 100 mm et de préférence égale à - 10 mm. La lentille convergente est disposée en aval de la lentille divergente. Elle présente une distance focale comprise entre 20 mm et 200 mm et est de préférence égale à 50 mm. Les deux lentilles sont séparées par une distance comprise entre 20 mm et 100 mm et est de préférence égale à 40 mm. Ce système de collimation télescope permet de réduire considérablement la distance de collimation et est par conséquent très avantageux dans le cas des faisceaux très faiblement divergents en sortie des fibres optiques.

Avantageusement, la lentille de focalisation 30 sert à focaliser le faisceau laser et de plus, elle sert de hublot entre la bougie et la chambre de combustion 10.

Avantageusement, une longue distance de focalisation de la lentille 30 permet pour une même taille de point focal 32 de focaliser à une plus grande distance à l'intérieur de la chambre de combustion 10.

**Revendications**

1.  Système d'allumage laser (2) d'un carburant pulvérisé dans une chambre de combustion (10), le système comportant :

    - une source laser (4) adaptée pour générer un faisceau laser (6) ;
    - une fibre optique (8) propre à transmettre le faisceau laser généré (6) dans la chambre de combustion (10) ;
    - des moyens de couplage (12, 16, 17, 18) de la source laser (4) à la fibre optique (8) ;

    les moyens de couplage (12, 16, 17, 18) comprennent :

    - une lentille de couplage (18) ;
    - un connecteur (17) de raccordement de la source laser (4) à la fibre optique (8) ; et
    - des moyens (16) de maintien rectilignes d'un tronçon d'entrée (23) de la fibre optique (8) disposés en aval du connecteur (17) et s'étendant sur une distance prédéfinie de la fibre optique (8); **caractérisé en ce que** la lentille de couplage (18) est propre à focaliser le faisceau laser (6) en un point focal (20) situé en amont de la fibre optique (8).

2.  Système d'allumage laser (2) selon la revendication 1, **caractérisé en ce que** la lentille de couplage (18) présente une distance focale comprise entre 50 et 200 mm.

3.  Système d'allumage laser (2) selon l'une quelconque des revendications précédentes, **caractérisé en ce que** les moyens de maintien rectilignes (16) de la fibre optique (8) s'étendent sur une distance supérieure ou égale à 20 cm pour empêcher la destruction de la fibre optique (8).

4.  Système d'allumage laser (2) selon l'une quelconque des revendications précédentes, **caractérisé en ce que** les moyens de couplage (12, 16, 17, 18) de la source laser (4) à la fibre optique (8) comportent entre la source laser (4) et la fibre optique (8), un boîtier (12) contenant un gaz ayant un potentiel d'ionisation supérieur au potentiel d'ionisation de l'air.

5.  Système d'allumage laser (2) selon l'une quelconque des revendications précédentes, **caractérisé en ce que** la source laser (4) est propre à produire un faisceau laser (6) ayant un profil uniforme en champ proche.

6.  Système d'allumage laser (2) selon l'une quelconque des revendications précédentes, **caractérisé en ce qu'**il comprend des moyens de couplage (24, 28, 30) de la fibre optique (8) à la chambre de combustion (10) comportant au moins une lentille convergente de collimation (28) présentant une distance focale comprise entre 30 et 400 mm.

7.  Système d'allumage selon la revendication 6, **caractérisé en ce que** les moyens de couplage (24, 28, 30) de la fibre optique (8) à la chambre de combustion (10) comprennent en outre en aval de la lentille de collimation (28), une lentille de focalisation (30) présentant une distance de focalisation comprise entre 5 et 200 mm.

8.  Système d'allumage selon la revendication 7, **caractérisé en ce que** la lentille de focalisation (30) est une lentille en saphir recouverte d'une couche anti-reflet d'oxyde de silicium, l'épaisseur de la couche d'oxyde de silicium étant définie à partir de la formule suivante :

$$\text{Épaisseur de la couche d'oxyde de silicium} = \frac{m \times 0{,}25 \times \lambda}{n} \pm 50\,nm$$

    dans laquelle :

    - m est un nombre entier pair ;
    - $\lambda$ est la longueur d'onde du faisceau laser ; et
    - n est l'indice de réfraction de l'oxyde de silicium.

9.  Système d'allumage laser (2) selon l'une quelconque des revendications précédentes, **caractérisé en ce que** la source laser est propre à générer un faisceau laser (6) de puissance minimale égale à 20 mJ.

**10.** Système d'allumage laser (2) selon l'une quelconque des revendications 6 à 8, **caractérisé en ce que** les moyens de couplage (24, 28, 30) de la fibre optique (8) à la chambre de combustion (10) comporte en outre une lentille divergente disposée en aval de la fibre optique (8) et en amont de la lentille de collimation (28), la lentille divergente présentant une distance focale comprise entre - 20 mm et - 200 mm.

**Claims**

**1.** Laser ignition system (2) for a fuel sprayed into a combustion chamber (10), the system comprising:

   - a laser source (4) adapted to generate a laser beam (6);
   - an optical fibre (8) suitable for transmitting the generated laser beam (6) into the combustion chamber (10);
   - means (12, 16, 17, 18) for coupling the laser source (4) to the optical fibre (8);

   the coupling means (12, 16, 17, 18) comprising :

   - a coupling lens (18);
   - a connector (17) for connecting the laser source (4) to the optical fibre (8); and
   - rectilinear holding means (16) for an entry section (23) of the optical fibre (8), said means being disposed downstream of the connector (17) and extending over a predefined distance of the optical fibre (8);

   **characterised in that** the coupling lens (18) is suitable for focussing the laser beam (6) at a focal point (20) located upstream of the optical fibre (8).

**2.** Laser ignition system (2) according to claim 1, **characterised in that** the coupling lens (18) has a focal length of between 50 and 200 mm.

**3.** Laser ignition system (2) according to any one of the preceding claims, **characterised in that** the rectilinear holding means (16) of the optical fibre (8) extend over a distance that is greater than or equal to 20 cm to prevent the destruction of the optical fibres (8).

**4.** Laser ignition system (2) according to any ane of the preceding claims, **characterised in that** the means (12, 16, 17, 18) for coupling the laser source (4) to the optical fibre (8) comprise, between the laser source (4) and the optical fibre (8), a housing (12) containing a gas having an ionisation potential greater than that of air.

**5.** Laser ignition system (2) according to any one of the preceding claims, **characterised in that** the laser source (4) is capable of producing a laser beam (6) having a uniform profile in the near field.

**6.** Laser ignition system (2) according to any one of the preceding claims, **characterised in that** it comprises means (24, 28, 30) for coupling the optical fibre (8) to the combustion chamber (10) comprising at least one convergent collimator lens (28) having a focal length of between 30 and 400 mm.

**7.** Ignition system according to claim 6, **characterised in that** the means (24, 28, 30) for coupling the optical fibre (8) to the combustion chamber (10) further comprise, downstream of the collimator lens (28), a focussing lens (30) having a focal length of between 5 and 200 mm.

**8.** Ignition system according to claim 7, **characterised in that** the focussing lens (30) is a sapphire lens covered with an anti-reflection layer of silicon oxide, the thickness of the silicon oxide layer being defined by the following formula:

$$\text{thickness of the silicon oxide layer} = \frac{m \times 0.25 \times \lambda}{n} \pm 50 \text{ nm}$$

wherein:

   m is an even integer;
   $\lambda$ is the wavelength of the laser beam; and
   n is the refractive index of the silicon oxide.

9.  Laser ignition system (2) according to any one of the preceding claims, **characterised in that** the laser source is suitable for generating a laser beam (6) with a minimum power of 20 mJ.

10. Laser ignition system (2) according to any one of claims 6 to 8, **characterised in that** the means (24, 28, 30) for coupling the optical fibre (8) to the combustion chamber (10) further comprise a divergent lens disposed downstream of the optical fibre (8) and upstream of the collimator lens (28), the divergent lens having a focal length of between -20 mm and -200 mm.

**Patentansprüche**

1.  Laser-Zundsystem (2) zur Laser-Zündung eines zerstäubten Kraftstoffs in einer Brennkammer (10), wobei das System folgendes aufweist:

    - eine Laserquelle (4), die dazu ausgelegt ist, einen Laserstrahl (6) zu erzeugen;
    - einen Lichtwellenleiter (8), der dazu geeignet ist, den erzeugten Laserstrahl (6) in die Brennkammer (10) zu überragen;
    - Einrichtungen (12, 16, 17, 18) zum Koppeln der Laserquelle (4) mit dem Lichtwellenleiter (8);

    wobei die Keppeleinrichtungen (12, 16, 17, 18) folgende aufweisen:

    - eine Kippellinse (18);
    - einen Verbinder (17) zum Anschliessen der Laserquelle (4) an den Lichtwellenleiter (8); und
    - Einrichtungen (16) zum Geradehalten eines Eisgangsbereichs (23) des Lichtwellenleiters (8), die stromabwärts von dem Verbinder (17) angeordnet sind und sich über eine vorgegebene Strecke des Lichtwellenleiters (8) erstrecken;

    **dadurch gekennzeichnet,**
    **dass** die Koppetlinse (18) dazu geeignet ist, den Laserstrahl (6) in einem stromaufwärts von dem Lichtwellenleiter (8) gelegenen Brennpunkt (20) zu fokussieren,

2.  Laser-Zündsystem (2) nach Anspruch 1,
    **dadurch gekennzeichnet,**
    **dass** die Koppellinse (18) eine Brennweite aufweist, die zwischen 50 mm und 200 mm liegt.

3.  Laser-Zündsystem (2) nach einem der vorherigen Ansprüche,
    **dadurch gekennzeichnet,**
    **dass** sich die Einrichtungen (16) zum Geradehalten des Lichtwellenleiters (8) über eine Strecke von mehr als oder gleich 20 cm erstrecken, um eine Zerstörung des Lichtwellenleiters (8) zu verhindern.

4.  Laser-Zündsystem (2) nach einem der vorherigen Ansprüche,
    **dadurch gekennzeichnet,**
    **dass** die Einrichtungen (12, 16, 17, 18) zum Koppeln der Laserquelle (4) mit dem Lichtwellenleiter (8) zwischen der Laserquelle (4) und dem Lichtwellenleiter (8) ein Gehäuse (12) aufweisen, das ein Gas mit einem höheren Ionisierungspotenzial als dem Ionisierungspotenzial von Luft enthält.

5.  Laser-Zündsystem (2) nach einem der vorherigen Ansprüche,
    **dadurch gekennzeichnet,**
    **dass** die Laserquelle (4) dazu geeignet ist, einen Laserstrahl (6) mit einem gleichförmigen Strahlprofil im Nahfeld zu erzeugen.

6.  Laser-Zündsystein (2) nach einem der vorherigen Anspruche,
    **dadurch gekennzeichnet,**
    **dass** es Einrichtungen (24, 28, 30) zum Koppeln des Lichtwellenleiters (8) mit der Brennkammer (10) aufweist, welche mindestens eine konvexe Kollimationslinse (28) mit einer Brennweite aufweisen, die zwischen 30 mm und 400 mm liegt.

7.  Zündsystem nach Anspruch 6,

**dadurch gekennzeichnet,**
**dass** die Einrichtungen (24. 28, 30) zum Koppeln des Lichtwellenieiters (8) mit der Brennkammer (10) ferner stromabwärts von der Kollimationslinse (28) eine Fokussierlinse (30) mit einer Brennweite aufweisen, die zwischen 5 mm und 200 mm liegt.

8.  Zündsystem nach Anspruch 7,
    **dadurch gekennzeichnet,**
    **dass** die Fokussierlinse (30) eine mit einer Antireflexionsschicht aus Siliciumoxid beschichtete Saphirlinse ist, wobei die Dicke der Siliciumoxidschicht durch die folgende Formel definiert ist:

$$\text{Dicke der Siliciumoxidschicht} = \frac{m \times 0{,}25 \times \lambda}{n} \pm 50 \, nm$$

wobei

- m eine ganze gerade Zahl ist;
- $\lambda$ die Wellenlänge des Laserstrahle ist; und
- n der Brechungskoeffizient von Siliciumoxid ist.

9.  Laser-Zündsystem (2) nach einem der vorherigen Ansprüche,
    **dadurch gekennzeichnet,**
    **dass** die Laserquelle dazu geeignet ist, einen Laserstrahl (6) mit einer minimalen Leistung zu erzeugen, die gleich 20 mJ ist.

10. Laser-Zündsystem (2) nach einem der Ansprüche 6 bis 8,
    **dadurch gekennzeichnet,**
    **dass** die Einrichtungen (24, 28, 30) zum Koppeln des Lichtwellenleiters (8) mit der Brennkammer (10) ferne eine stromabwärts von dem Lichtwellenleiter (8) und stromaufwärts von der Kollimationslinse (28) angeordnete Zerstreuungslinse aufweisen, wobei die Zerstreuungslinse eine Brennweite aufweist, die zwischen -20 mm und -200 mm liegt.

FIG.1

FIG.2

EP 1 798 397 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9811388 A

- EP 0290154 A